# EUROPÄISCHE PATENTANMELDUNG

(11) **EP 3 958 450 A1**
(43) Veröffentlichungstag der Anmeldung: **23.02.2022**
(21) Anmeldenummer: 20305942.3
(22) Anmeldetag: 21.08.2020
(51) Int. Cl.: H02K 41/03, H02K 11/21, B65G 54/02, G01G 19/00, G01G 19/04, G01G 19/08

(54) **LINEARMOTORSYSTEM UND BETRIEBSVERFAHREN FÜR EIN SOLCHES**

(71) Anmelder: Schneider Electric Industries SAS, 92500 Rueil Malmaison (FR)
(72) Erfinder: Nickel, Jürgen, 97297 Waldbüttelbrunn (DE)
(74) Vertreter: Manitz Finsterwald Patent- und Rechtsanwaltspartnerschaft mbB

(57) **Zusammenfassung**

Die Erfindung betrifft ein Linearmotorsystem, insbesondere Transportsystem, z.B. Multicarrier, umfassend: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten, wobei die Steuerungseinrichtung dazu eingerichtet ist, während einer Bewegung des Läufers eine Trägheitsreaktion der bewegten Masse des Läufers zu erfassen und auf Basis der Trägheitsreaktion eine Masseinformation betreffend die Masse des Läufers zu ermitteln.

## Beschreibung

Die vorliegende Erfindung betrifft ein Linearmotorsystem, insbesondere Transportsystem, z.B. Multicarrier, umfassend: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten. Die Erfindung betrifft auch ein Verfahren zum Betreiben eines solchen Systems.

Linearmotoren sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multicarrier besonders vorteilhaft. Diese umfassen insbesondere eine Mehrzahl an Läufern, also Transporteinheiten, die einzeln und unabhängig voneinander bewegbar sind. In einem typischen Multicarrier-System ist die Führungsbahn in sich geschlossen, also praktisch endlos, was einen Umlaufbetrieb ermöglicht.

Zum Beispiel in industriellen Anlagen ist es häufig nötig, die Masse eines Produkts oder einer Produktmenge zu bestimmen, so etwa beim Abfüllen von Produkten in einer vorbestimmten Anzahl oder Menge. Hierfür werden typischerweise Waagen eingesetzt, also spezielle auf die Gewichtsermittlung ausgelegte Vorrichtungen mit einer Mechanik und einer Sensorik zur Ermittlung der Masse.

Es ist eine Aufgabe der Erfindung, die Masse eines Läufers in einem Linearmotorsystem der eingangs genannten Art und/oder eines am Läufer angeordneten Gegenstands auf besonders einfache Weise zu bestimmen.

Diese Aufgabe wird durch ein Linearmotorsystem gemäß Anspruch 1 gelöst, und insbesondere dadurch, dass die Steuerungseinrichtung dazu eingerichtet ist, während einer Bewegung des Läufers eine Trägheitsreaktion der bewegten Masse des Läufers zu erfassen und auf Basis der Trägheitsreaktion eine Masseinformation über die Masse des Läufers zu ermitteln.

Die Erfindung nutzt also die Trägheit der Masse während einer Bewegung zur Ermittlung der Masseinformation aus. Die so ermittelte Masseinformation bezieht sich zunächst auf den Läufer selbst und gegebenenfalls mit dem Läufer transportierte Gegenstände. Die Trägheitsreaktion kann insbesondere eine Kraft, eine Positions- und/oder Lageänderung und/oder eine Abweichung eines Istwerts von einem Sollwert, der für die Bewegung des Läufers von der Steuerungseinrichtung festgelegt wird, umfassen. Somit lässt sich die Masseinformation auf einfache Weise ermitteln, typischerweise durch Einrichtungen, die das Linearmotorsystem ohnehin aufweist, ohne dass zusätzliche Sensoren vorgesehen werden müssen.

Die Trägheit der bewegten Masse, nämlich des Läufers und ggf. eines mit dem Läufer bewegten Gegenstandes, während einer Bewegung des Läufers äußert sich beispielsweise in einer mehr oder weniger starken Abweichung einer Rückführungsinformation von einem in der Steuerungseinrichtung definierten oder berechneten Sollwert und/oder in einer Regelreaktion einer Bewegungsregelung. Die Steuerungseinrichtung kann also beispielsweise dazu eingerichtet sein, den Läufer zu einer Bewegung anzusteuern, wobei die Steuerungseinrichtung wenigstens einen Sollwert, zum Beispiel einen Positions-, Geschwindigkeits- oder Beschleunigungssollwert, vorgibt und anhand einer Abweichung eines Istwerts vom Sollwert, die insbesondere abhängig von der Trägheit der bewegten Masse ist, eine Masseinformation betreffend die Masse des Läufers zu ermitteln. Allgemein beruht also die Erfindung auf der Idee, eine Masseinformation betreffend die Masse des Läufers unter Ausnutzung der Trägheit der Masse des Läufers während einer Bewegung zu ermitteln.

Grundsätzlich umfasst die Masseinformation eine Information über die gesamte mit dem Läufer bewegte Masse, d.h. wenn ein Gegenstand mit dem Läufer bewegt wird, beispielsweise weil ein Produkt auf dem Läufer aufliegt oder an diesem angeordnet ist, wird die Masse dieses Gegenstandes zunächst miterfasst. Die Masse des Läufers ohne einen solchen Gegenstand ist aber häufig bekannt oder kann auch zu einem Zeitpunkt bestimmt werden, an dem der Gegenstand nicht am Läufer vorhanden ist. Durch Bildung der Differenz zwischen der ermittelten Masseinformation und der Masseinformation der Masse des Läufers allein kann eine Masseinformation betreffend lediglich die Masse des Gegenstands abgeleitet werden.

Weiter grundsätzlich kann die Masseinformation zum Beispiel einen Massewert, zum Beispiel in Gramm, umfassen. Hierbei wird letztlich die Masse des Läufers, gegebenenfalls zusammen mit derjenigen eines Gegenstands, direkt ermittelt. Der Läufer wirkt somit letztlich wie eine Waage. Generell kann durch die Erfindung also auf einfache Weise die Masse des Läufers und/oder eines mit dem Läufer bewegten Gegenstandes, insbesondere bis auf einen Bereich von wenigen Gramm oder wenigen zehn Gramm, bestimmt werden. Grundsätzlich mag die erfindungsgemäße Methode zur Ermittlung der Masseinformation nicht so genau sein, wie hochgenaue Industriewaagen. Gleichwohl ist auch eine grobe Ermittlung der Masseinformation in vielen Anwendungssituationen vorteilhaft, beispielsweise auf wenige Gramm genau, z.B. auf 5 Gramm genau. Dies gilt insbesondere für Fälle, in denen ermittelt werden soll, ob ein Produkt als Ganzes oder in korrekter Anzahl am Läufer vorhanden ist.

Alternativ oder zusätzlich kann die Masseinformation z.B. keinen Massewert umfassen, sondern beispielsweise lediglich mit der Masse des Läufers, gegebenenfalls zusammen mit derjenigen eines Gegenstands, zusammenhängen. In vielen Anwendungsfällen ist es zum Beispiel nicht nötig, einen Massewert zu ermitteln. So kann es häufig ausreichen zu wissen, ob die Trägheitsreaktion und/oder die Masseinformation in einem vorgegebenen Bereich liegt oder nicht. Auch kann beispielsweise lediglich eine Differenz oder ein Verhältnis zwischen einer ersten Masseinformation und einer zweiten, später ermittelten Masseinformation ermittelt werden und aus dieser Differenz eine weitere Information abgeleitet werden. Sowohl die Ermittlung, ob die Trägheitsreaktion und/oder die Masseinformation in einem vorgegebenen Bereich liegt oder nicht, als auch die Ermittlung einer Differenz oder eines Verhältnisses zweier Masseinformationen können auf einfache Weise dazu dienen, festzustellen, ob ein Gegenstand, insbesondere ein Produkt, am Läufer vorhanden ist oder nicht, gegebenenfalls in der vorgesehenen Anzahl und/oder Menge.

Linearmotorsysteme der eingangs genannten Art umfassen typischerweise eine Informationsrückführungseinrichtung zur Rückführung wenigstens einer Rückführungsinformation über die Bewegung des Läufers und/oder die Aktivität der Elektromagneten während einer Bewegung des Läufers an die Steuerungseinrichtung.

Eine beispielhafte Informationsrückführungseinrichtung umfasst eine Positionserfassungseinrichtung. Eine solche kann beispielsweise als Inkrementalgeber- oder Absolutgeber ausgebildet sein. Die Positionserfassungseinrichtung kann bevorzugt magnetisch arbeiten. Zum Beispiel kann der Läufer einen Positionsmagneten umfassen, wobei entlang der Führungsbahn eine Vielzahl von Magnetsensoren angeordnet sein können. Alternativ oder zusätzlich kann beispielsweise auch eine optische Positionserfassungseinrichtung vorgesehen sein.

Ferner ist die Steuerungseinrichtung eines Linearmotorsystems der eingangs genannten Art typischerweise dazu eingerichtet, die Bewegung des Läufers, insbesondere auf Basis der Rückführungsinformation, zu regeln. Dies erlaubt eine präzise Bewegung des Läufers entlang der Führungsbahn. Beispielsweise kann eine Geschwindigkeitsregelung, eine Positionsregelung, eine Beschleunigungsregelung, eine Stromregelung und/oder eine Kraftregelung vorgesehen sein.

Die Erfindung nutzt insbesondere diese typischerweise ohnehin vorhandene Informationsrückführung und/oder Regelung nun vorteilhaft aus, um auf einfache Weise die Masse des Läufers zu bestimmen. So kann die Steuerungseinrichtung dazu eingerichtet sein, auf Basis einer Regelabweichung und/oder einer Regelreaktion eine Masseinformation betreffend die Masse des Läufers zu ermitteln. Anders ausgedrückt kann die Trägheitsreaktion eine Regelabweichung und/oder Regelreaktion sein oder umfassen. Insbesondere kann die Masseinformation auf Basis eines Schleppfehlers ermittelt werden.

Durch die Erfindung ist somit die Ermittlung einer Masseinformation ohne zusätzliche Hardware, insbesondere ohne einen zusätzlichen Sensor, und ohne zusätzliche Mechanik, möglich. Vielmehr nutzt die Erfindung insbesondere die typischerweise ohnehin an einem Linearmotorsystem vorhandene Sensorik und lässt sich ansonsten lediglich in der Software implementieren. Durch die Erfindung lässt sich also die Funktion "Wiegen" auf einfache Weise in das Linearmotorsystem integrieren und über ein Software-Update sogar auf besonders einfache Weise an bestehenden Systemen nachrüsten. Der Läufer bildet somit letztlich eine, insbesondere in Bezug auf die Führungsbahn positionsunabhängige, Masseermittlungseinrichtung für einen mit dem Läufer bewegten Gegenstand. Neben den Läufern ist grundsätzlich keine andere Masseermittlungseinrichtung, wie z.B. eine Waage, ein Piezogeber o.ä. nötig oder vorhanden, wenn eine solche aber auch im konkreten System zusätzlich vorgesehen sein kann.

Bevorzugt wird die Trägheitsreaktion, insbesondere ausschließlich, in Längsrichtung in Bezug auf die Führungsbahn erfasst und es wird auf Basis dieser Trägheitsreaktion die Masseinformation ermittelt. Insbesondere kann die Trägheitsreaktion auf Basis einer von einem Positionserfassungssystem erfassten Position, Geschwindigkeit und/oder Beschleunigung des Läufers längs der Führungsbahn bzw. der Bewegungsrichtung entlang der Führungsbahn erfasst werden. Insbesondere kann die Trägheitsreaktion in Längsrichtung während einer Beschleunigung des Läufers in Längsrichtung erfolgen und erfasst werden. Die Beschleunigung kann dabei grundsätzlich positiv oder negativ sein.

Grundsätzlich kann es sich bei der Bewegung des Läufers, während der die Trägheitsreaktion erfasst wird, um eine normale und gewünschte Bewegung, nämlich vor und/oder zurück entlang der Führungsbahn, handeln. Die normale Bewegung wird somit vorteilhaft zur Ermittlung der Masseinformation ausgenutzt, weil dabei eine Trägheitsreaktion ebenfalls in Längsrichtung der Führungsbahn und entgegengesetzt zur Beschleunigung des Läufers erfolgt. Typischerweise ist an einem Linearmotorsystem eine Bewegung des Läufers im Wesentlichen nur eindimensional möglich, nämlich entlang der Führungsbahn, aber typischerweise in beiden entgegengesetzten Richtungen entlang der Führungsbahn.

Insoweit die Steuerungseinrichtung auch zur Regelung der Bewegung des Läufers eingerichtet ist, bezieht sich diese Regelung also insbesondere auf die Längsrichtung der Führungsbahn. In Bezug auf diese kann etwa die Position, die Geschwindigkeit und/oder die Beschleunigung des Läufers und/oder die Kraft geregelt werden, welche von den Elektromagneten auf den Läufer ausgeübt wird.

Eine Trägheitsreaktion kann aber beispielsweise auch in Bezug auf eine andere Raumrichtung, zum Beispiel quer zur Führungsbahn, erfasst werden und als Basis zur Ermittlung der Masseinformation dienen. In diesem Zusammenhang kann beispielsweise die Führungsbahn eine Kurve umfassen und während einer Bewegung des Läufers in der Kurve kann eine Trägheitsreaktion quer zur Führungsbahn erfasst werden. Diese Trägheitsreaktion erfolgt, weil die Masse des Läufers während der Kurve zentrifugal nach außen drängt. Auch auf Basis einer solchen Trägheitsreaktion lässt sich eine Masseinformation ermitteln. Die Bewegung erfolgt während der Erfassung der Trägheitsreaktion im einfachsten Fall mit konstanter Geschwindigkeit, kann aber grundsätzlich ein beliebiges Geschwindigkeitsprofil aufweisen.

Ein weiterer Vorteil der Erfindung liegt darin, dass sich die Masseinformation unabhängig davon ermitteln lässt, in welcher Orientierung das Linearmotorsystem und/oder der Läufer im Raum angeordnet ist und in welcher Orientierung der mit dem Läufer bewegte Gegenstand in Bezug auf den Läufer angeordnet ist. Denn die Trägheitsreaktion ergibt sich allein aus der Bewegung des Läufers, gegebenenfalls zusammen mit einem weiteren Gegenstand. Gewöhnliche Masseermittlungseinrichtungen, wie etwa Waagen, funktionieren hingegen nur in Bezug auf die Richtung der Schwerkraft, also vertikal.

Gemäß einer Ausführungsform ist vorgesehen, dass die Trägheitsreaktion auf Basis einer Position des Läufers relativ zur Führungsbahn, insbesondere einer Position längs der Führungsbahn, erfasst wird. Die Position des Läufers kann beispielsweise eine Rückführungsinformation sein. Eine Positionserfassungseinrichtung ist häufig ohnehin an einem Linearmotorsystem vorhanden, sodass diese ohnehin vorhandene Sensorik eingesetzt werden kann und keine weiteren Sensoren nötig sind. Zudem sind Positionserfassungseinrichtungen für Linearmotorsysteme mit hoher Genauigkeit und zahlreich verfügbar.

Alternativ oder zusätzlich kann die Trägheitsreaktion beispielsweise auf Basis eines Spulenstroms wenigstens eines der Elektromagneten erfasst werden. Ein solcher kann zum Beispiel auf einfache Weise aus einer Regelreaktion abgeleitet werden, kann aber z.B. auch gemessen werden. Der Spulenstrom kann beispielsweise - bei gegebener Sollbeschleunigung - bei höherer Masse größer sein als bei einer kleineren zu bewegenden Masse.

Bei einer vorteilhaften Ausgestaltung ist die Steuerungseinrichtung dazu eingerichtet, auf Basis der Masseinformation eine Produktinformation betreffend ein vom Läufer zu bewegendes Produkt zu ermitteln, insbesondere eine Masseinformation betreffend die Masse des Produkts und/oder eine Anzahl an Produkten oder Produktteilen. Die Produktinformation kann zum Beispiel eine Information über das Vorhandensein des Produkts, gegebenenfalls in vorgesehener Zahl und/oder Menge umfassen. Die Produktinformation kann aber beispielsweise auch einen Massewert des Produkts, zum Beispiel in Gramm, umfassen. Eine Masseinformation betreffend die Masse des Produkts kann beispielsweise durch Subtraktion einer vorbekannten oder vorher ermittelten Masseinformation betreffend die Masse des Läufers ohne Produkt von einer ermittelten Masseinformation betreffend die Masse des Läufers mit Produkt ermittelt werden. Über die Masseinformation lassen sich also letztlich zahlreiche Informationen betreffend das Produkt ableiten. Diese können vorteilhaft zum Beispiel im Rahmen einer Prozesssteuerung, etwa in einer Abfüllanlage oder einer Sortieranlage genutzt werden, um den Prozess zu verbessern.

Die Steuerungseinrichtung kann beispielsweise dazu eingerichtet sein, den Läufer zu einer Masseermittlungsbewegung anzusteuern, während der Masseermittlungsbewegung eine Trägheitsreaktion, insbesondere durch eine Rückführungsinformation, eine Regelabweichung und/oder eine Regelreaktion, zu erfassen und auf deren Basis die Masseinformation zu ermitteln. Mit dem Begriff "Masseermittlungsbewegung" ist eine reine Masseermittlungsbewegung gemeint. Die Bewegung erfolgt also gewissermaßen nur zum Zweck der Ermittlung der Masseinformation. Typischerweise geht eine Masseermittlungsbewegung von einem Ausgangspunkt aus und umfasst auch eine Rückkehr zum Ausgangspunkt. Dieser Ausgangpunkt ist insbesondere eine Position, an der ein Zuführen oder Abführen des Produkts zum bzw. vom Läufer vorgesehen ist.

Grundsätzlich kann die Masseinformation aber bei einer beliebigen Bewegung ermittelt werden, insbesondere auch während einer Bewegung, die im Rahmen der Anwendung des Linearmotorsystems ohnehin durchgeführt werden soll.

Ferner kann während einer Bewegung entlang einer ohnehin vorgesehenen Strecke ein Bewegungsprofil der Bewegung ein Masseermittlungsprofil aufweisen, also eine besondere Abweichung von einer normalen Bewegung, wobei das Masseermittlungsprofil beispielsweise hinsichtlich hoher Genauigkeit der Masseermittlung optimiert sein kann.

Allgemein kann eine Bewegung, während der eine Trägheitsreaktion bzw. eine Masseinformation ermittelt wird, oder ein Bewegungsprofil zum Beispiel ein Geschwindigkeitsprofil umfassen, welches zumindest teilweise oder zumindest im Wesentlichen linear rampenförmig, sägezahnförmig oder sinusförmig ist.

Die Masseinformation kann beispielsweise in wenigstens einem Masseermittlungsabschnitt in Bezug auf die Führungsbahn ermittelbar sein. Gemäß einer bevorzugten Ausführungsform ist vorgesehen, dass der Masseermittlungsabschnitt auswählbar und insbesondere die Auswahl veränderbar ist. Dies erlaubt eine flexible Nutzung des Linearmotorsystems zur Ermittlung der Masseinformation. Insbesondere können ein oder mehrere Masseermittlungsabschnitte frei wählbar und/oder frei definierbar sein.

Bei einer Weiterbildung umfasst das Linearmotorsystem eine Schnittstelle zur Ausgabe der Masseinformation. Bei der Schnittstelle kann es sich beispielsweise um eine Busschnittstelle handeln. Die Schnittstelle kann beispielsweise zur Ausgabe der Masseinformation an ein Anwendergerät ausgebildet sein. Zum Beispiel Industrieanlagen mit einem Linearmotorsystem als Transportsystem umfassen häufig eine Vielzahl von verschiedenen Geräten, die hier jeweils ein Anwendergerät bilden. Ferner kann auch ein Prozessleitsystem ein Anwendergerät in diesem Sinne bilden. Die Masseinformation kann vom Prozessleitsystem erfasst werden und die verschiedenen Geräte der Industrieanlage können auf der Grundlage der Information angesteuert werden.

Alternativ oder zusätzlich kann das Linearmotorsystem eine Schnittstelle zur Eingabe von Daten und/oder Befehlen durch einen Anwender und/oder durch ein Anwendergerät umfassen. Über die Schnittstelle kann es dem Anwender zum Beispiel ermöglicht werden, wenigstens einen Grenzwert oder Bereich für die Masseinformation einzugeben. Das Linearmotorsystem kann beispielsweise auf Basis dieser Eingabe eine Fehlerinformation ermitteln. Auch kann zum Beispiel ein Abschnitt der Führungsbahn über die Schnittstelle auswählbar sein, in dem die Masseinformation ermittelt wird und insbesondere mit einem bestimmten Grenzwert oder Bereich verglichen wird.

Die Steuerungseinrichtung umfasst bevorzugt eine Steuerungsbibliothek, d.h. z.B. eine in der Steuerungseinrichtung vorhandene oder verwendete Softwarebibliothek, die Funktionen zur Berechnung der Masseinformation aus der Trägheitsreaktion zur Verfügung stellt. Über eine Schnittstelle kann dann zum Beispiel lediglich ein Massewert oder eine Information über ein Vorhandensein eines Produkts, gegebenenfalls in richtiger Menge und/oder Anzahl, ausgegeben werden. Auch kann eine Fehlerinformation ausgegeben werden. Diese Maßnahmen ermöglichen die einfache Nutzung der Masseinformation durch den Anwender.

Mit weiterem Vorteil kann das Linearmotorsystem zum Beispiel mehrere, insbesondere unabhängig voneinander bewegbare Läufer umfassen. Insbesondere kann die Masseinformation für alle Läufer (separat) ermittelbar sein. Ferner kann beispielsweise auch eine koordinierte Masseermittlung von zwei verbundenen und/oder gemeinsam bewegten Läufern möglich sein. Dies kann zum Beispiel sinnvoll sein, wenn zwei Läufer gemeinsam einen Gegenstand, zum Beispiel ein Produkt oder einen Container, bewegen, insbesondere transportieren.

Der oder die Läufer können bevorzugt an der Führungsbahn mechanisch geführt sein, insbesondere durch eine Rollenführung.

Die Aufgabe wird auch durch ein Verfahren gemäß dem hierauf gerichteten, unabhängigen Anspruch gelöst. Dieses Verfahren dient dem Betreiben eines Linearmotorsystems, welches umfasst: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und der einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten. Das Verfahren umfasst außerdem, dass während einer Bewegung des Läufers eine Trägheitsreaktion der bewegten Masse des Läufers erfasst wird und auf Basis der Trägheitsreaktion eine Masseinformation betreffend die Masse des Läufers ermittelt wird.

Bei einer Ausführungsform ist vorgesehen, dass während einer ersten Bewegung des Läufers eine erste Masseinformation ermittelt wird, wobei während einer zweiten Bewegung desselben Läufers eine zweite Masseinformation ermittelt wird. Dabei kann bevorzugt zwischen den Bewegungen ein Produkt dem Läufer zugeführt oder vom Läufer abgeführt werden. So kann beispielsweise auf einfache Weise eine Masseinformation betreffend das Produkt durch Vergleichen der ersten Masseinformation mit der zweiten Masseinformation ermittelt werden. Auch kann zum Beispiel festgestellt werden, ob das Produkt, gegebenenfalls in der richtigen Menge, tatsächlich zugeführt bzw. abgeführt wurde. Das Zuführen bzw. Abführen kann zum Beispiel im Stillstand erfolgen. Es kann aber grundsätzlich auch während einer Bewegung erfolgen. Die erste und die zweite Bewegung sind also nicht notwendigerweise durch einen zwischenzeitlichen Stillstand voneinander getrennt.

Gemäß einer Weiterbildung ist vorgesehen, dass eine Differenz zwischen zwei Masseinformationen, insbesondere zwischen der ersten und der zweiten Masseinformation, ermittelt wird. Auf Basis der Differenz lassen sich verschiedenste Informationen in einem Gesamtsystem ableiten, etwa eine Information darüber, ob ein Produkt vorhanden oder nicht vorhanden ist.

Auf der Basis der Masseinformation und/oder Differenz kann zum Beispiel eine Steuerung des Linearmotorsystems erfolgen. So kann zum Beispiel auf deren Basis eine bestimmte Position angefahren werden, ein Maximalstrom oder eine maximale Beschleunigung verändert werden, eine Leistungsplanung der elektrischen Leistung der Elektromagneten durchgeführt werden oder ähnliches. Ferner können zum Beispiel weitere Komponenten, insbesondere Anwendergeräte, auf Basis der Masseinformation oder hiervon abgeleiteten Informationen gesteuert werden.

Es kann zum Beispiel auch vorgesehen sein, dass die Masseinformation und/oder eine Differenz zwischen zwei Masseinformationen, insbesondere zwei ermittelten Masseinformationen, mit einem Sollwert und/oder einem Sollbereich verglichen wird. Insbesondere kann anhand des Vergleichs eine Fehlerinformation ermittelt werden. Wenn ein Fehler vorliegt, kann das Linearmotorsystem beispielsweise dazu angesteuert werden, dass der Läufer zurück zu einer Zuführungseinrichtung oder Abführungseinrichtung fährt. Dort kann dann der Fehler zum Beispiel behoben werden, etwa durch Zuführen bzw. Abführen einer weiteren Produktmenge oder -anzahl. Grundsätzlich kann der Fehler beispielsweise durch eine automatische Zuführungseinrichtung, Abführungseinrichtung oder Korrektureinrichtung behoben werden. Alternativ ist es zum Beispiel möglich, einen Läufer als fehlerhaft zu kennzeichnen und eine händische Korrektur zu veranlassen.

Die Fehlerinformation kann zum Beispiel eine Information darüber umfassen, ob ein Produkt am Läufer in vorgesehener Anzahl und/oder Masse vorhanden ist oder nicht. Dabei kann zum Beispiel ein Toleranzbereich für die Masseinformation definiert sein, z.B. vom Anwender vorgebbar sein.

Bei einer vorteilhaften Ausführungsform wird die Masseinformation in mehreren Abschnitten des Linearmotorsystems bezogen auf die Führungsbahn überwacht. So können auf einfache Weise Änderungen der Masseinformation festgestellt werden und, wenn diese Änderungen nicht mit einer gewünschten Änderung der Masse des mit dem Läufer bewegten Gegenstandes korrespondiert, eine Fehlerinformation abgeleitet werden. Vorzugsweise kann eine Überwachung über den gesamten vorgesehenen Bewegungsweg des Läufers vorgesehen sein. Ferner kann auch eine Überwachung der Masseinformation für mehrere Läufer vorgesehen sein. Letztlich kann somit ein, insbesondere umfassendes und/oder dauerhaftes, Monitoring der Masseinformationen aller Läufer über die gesamte Bewegungsbahn des Linearmotorsystems implementiert sein. Hierdurch lassen sich Prozesse, in denen ein solches Linearmotorsystem verwendet wird, besser steuern und eine Vielzahl von Sensoren und separaten Verfahrensschritten zur Masseermittlung können eingespart werden.

Eine beispielhafte Anwendung des erfindungsgemäßen Verfahrens oder des erfindungsgemäßen Linearmotorsystems bildet zum Beispiel eine Abfüllanlage, etwa zum Abfüllen eines Schüttguts oder einer Flüssigkeit in einen Container. Hierbei kann das Linearmotorsystem beispielsweise zur Positionierung des Containers an einer Zuführeinrichtung und/oder zum Transport des Containers verwendet werden. Durch die Erfindung lässt sich hier auf einfache Weise die Masse des Containers bzw. des Schüttguts oder der Flüssigkeit bestimmen, insbesondere ohne dass der Container zwischenzeitlich auf eine separate Waage überführt werden muss.

Eine weitere beispielhafte Anwendung bildet eine Einsortieranlage, zum Beispiel mit einem Pick-and-Place-Roboter. Das Linearmotorsystem dient hier ebenfalls der Positionierung des Läufers, nämlich relativ zum Roboter. Der Roboter greift ein Produkt und legt es an dem Läufer ab, gegebenenfalls in einen Container, der sich auf dem Läufer oder am Läufer befindet. Dies wird insbesondere wiederholt, bis eine vorbestimmte Anzahl an Produkten am Läufer bzw. Container vorhanden ist. Der Läufer kann zum Beispiel anschließend die Produkte bzw. den Container abtransportieren. Die erfindungsgemäße Ermittlung der Masseinformation kann hier beispielsweise vorteilhaft dazu eingesetzt werden, um festzustellen, ob die vom Roboter durchgeführten Schritte erfolgreich waren, also ob der Roboter tatsächlich die vorbestimmte Anzahl an Produkten am Läufer bzw. im Container abgelegt hat. Um dies festzustellen, wird während einer Bewegung des Läufers die Masseinformation ermittelt. Wenn die Masseinformation in einem vorbestimmten Erwartungsbereich liegt, kann angenommen werden, dass die vom Roboter durchgeführten Schritte erfolgreich waren. Wenn dies nicht der Fall ist, kann dies zum Beispiel darauf hindeuten, dass ein oder mehrere Produkte nicht wie geplant am Läufer abgelegt wurden, zum Beispiel weil der Roboter das Produkt andernorts verloren oder gar nicht erst richtig gegriffen hat.

Allgemein kann es sich also bei einem mit dem Läufer bewegten Gegenstand zum Beispiel um ein Produkt, eine Produktmenge oder -anzahl und/oder um einen Container oder sonstigen Träger, z.B. für eine Produktmenge oder -anzahl, handeln.

Es versteht sich, dass die hierin beschriebenen Verfahren auch im Sinne der in Bezug auf die Vorrichtungen, also insbesondere Linearmotorsystem und Transportsystem, beschriebenen Einzelmerkmale und Ausführungsformen weitergebildet werden kann und umgekehrt.

Die Erfindung wird nachfolgend lediglich beispielhaft anhand der schematischen Zeichnungen erläutert.
- Fig. 1: zeigt ein als Transportsystem ausgebildetes Linearmotorsystem.
- Fig. 2: zeigt einen Kurvenabschnitt des Transportsystems der Fig. 1.
- Fig. 3: zeigt einen Querschnitt des Transportsystems der Fig. 1 mit Schnittebene senkrecht zu einer Führungsbahn.
- Fig. 4: zeigt eine Auftragung unterschiedlicher Bewegungsverläufe eines Läufers.

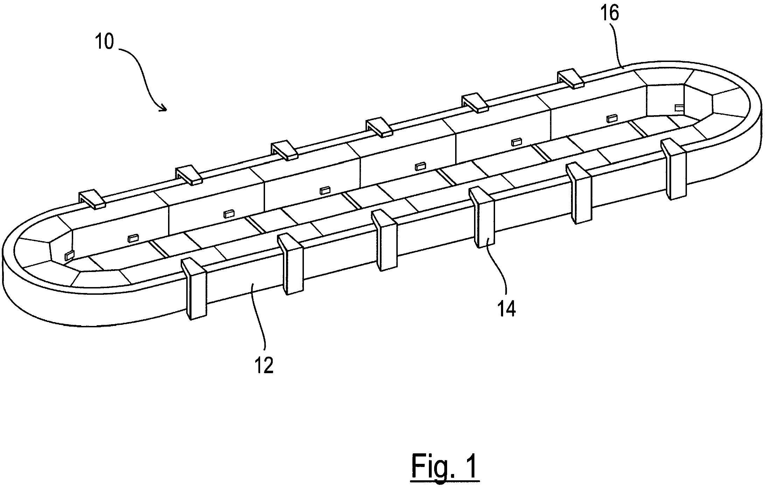

Ein erfindungsgemäßes Transportsystem 10, das als Multi-Carrier-System ausgebildet ist, ist in Fig. 1 dargestellt. Das Transportsystem 10 umfasst mehrere Linearmotoren 12, die aneinandergereiht angeordnet sind, so dass eine durchgehende und in diesem Fall umlaufende Bewegung der Läufer 14 entlang einer Führungsbahn 16 ermöglicht ist. Ferner umfasst das Transportsystem 10 mehrere Läufer 14, die einzelne Transportelemente des Transportsystems 10 bilden und die mittels der Linearmotoren 12 entlang der Führungsbahn 16, insbesondere unabhängig voneinander, bewegt werden können.

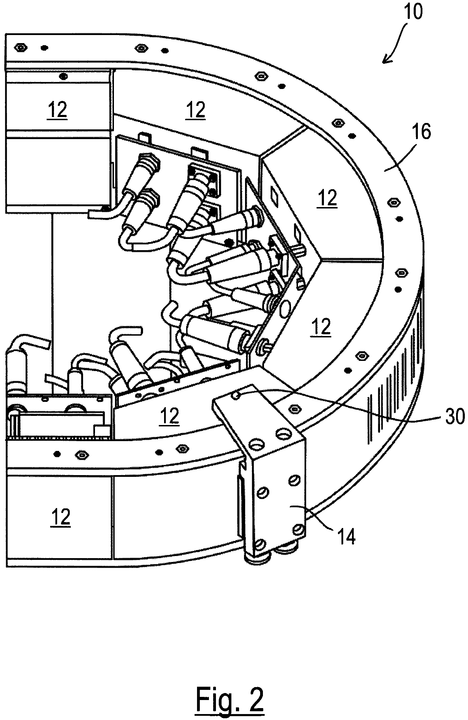

Fig. 2 zeigt einen Kurvenabschnitt des Transportsystems 10 in vergrößerter Ansicht. Hier ist lediglich ein Läufer 14 dargestellt, der entlang der Führungsbahn 16 bewegbar ist, nämlich über die Linearmotoren 12. Auf der dem Läufer 14 abgewandten Seite der Führungsbahn 16, also innerhalb der Kurve, sind verschiedene elektronische Einrichtungen zur Ansteuerung der Linearmotoren 12 sichtbar.

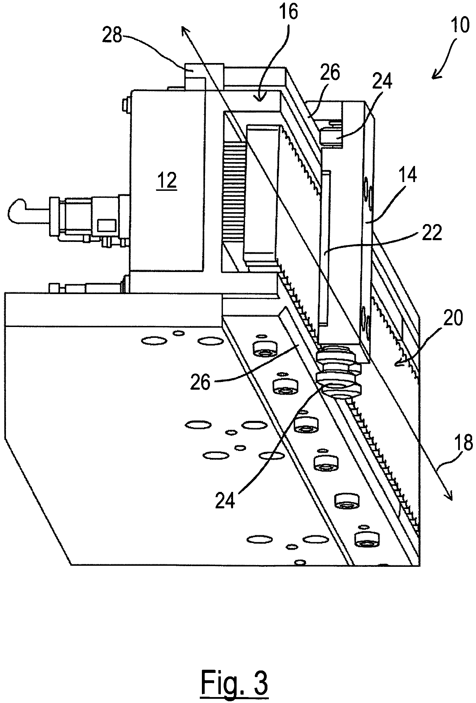

In Fig. 3 ist das Transportsystem 10 in einer Schnittansicht und vergrößert dargestellt. Es ist ein Läufer 14 sichtbar, der an der Führungsbahn 16 beweglich geführt ist. Dabei ist der Läufer 14 entlang einer Führungsachse 18 oder Bewegungsachse bewegbar. Zu einer Bewegung entlang der Führungsachse 18 wird der Läufer 14 durch eine Vielzahl von Elektromagneten 20 angesteuert, die an der Führungsbahn 16 angeordnet und entlang dieser gleichmäßig verteilt sind. Die Elektromagneten 20 wirken dabei mit einem am Läufer 14 angeordneten Permanentmagneten 22, der auch als Antriebsmagnet bezeichnet werden kann, zum Antrieb des Läufers zusammen.

Der Läufer 14 ist an der Führungsbahn 16 mechanisch geführt, nämlich durch eine Rollenführung. Diese umfasst Führungsrollen 24 am Läufer 14 und Führungsschienen 26 an der Führungsbahn 16. Der Läufer 14 wird dabei insbesondere über den Permanentmagneten 22 an der Führungsbahn 16 gehalten.

Das Transportsystem 10 umfasst außerdem eine Positionserfassungseinrichtung 28. Dies kann zum Beispiel als Reihe von einer Vielzahl von Magnetsensoren ausgebildet sein, die sich entlang der Führungsbahn 16 erstreckt. Am Läufer 14 kann zum Beispiel ein Permanentmagnet 30 vorgesehen sein, der auch als Positionsmagnet bezeichnet werden kann und in Fig. 2 sichtbar ist.

Das Transportsystem 10 umfasst außerdem eine nicht separat dargestellte Steuerungseinrichtung, die dazu eingerichtet ist, die Elektromagneten 20 gezielt anzusteuern, um den Läufer 14 entlang der Führungsbahn 16 bzw. der Führungsachse 18 zu bewegen. Die Positionserfassungseinrichtung 28 führt dabei eine Positionsinformation betreffend die Position des Läufers 14 in Bezug auf die Führungsachse 18 zurück zur Steuerungseinrichtung. Die Steuerungseinrichtung regelt die Bewegung des Läufers 14 auf Basis der Positionsinformation.

Wenn der Läufer 14 bewegt wird, ergibt sich grundsätzlich eine Trägheitsreaktion. Diese kann hier auf einfache Weise durch die Steuerungseinrichtung erfasst werden, da sich eine Trägheitsreaktion während einer Beschleunigung entlang der Führungsbahn 16 im Rahmen der Bewegungsregelung äußert. So ist insbesondere eine Regelabweichung und/oder eine Regelreaktion abhängig von der Trägheit. Die Trägheitsreaktion ist dabei abhängig von der bewegten Masse. Eine Regelabweichung kann zum Beispiel einfach durch das Positionserfassungssystem erfasst werden. Eine Regelreaktion ergibt sich zum Beispiel aus einem Ausgabewert eines Reglers der Steuerungseinrichtung, insbesondere aus einem Spulenstrom für wenigstens einen Elektromagneten.

Ist die Masse klein, so ist die Regelabweichung klein und/oder eine Regelreaktion nicht besonders stark. Ist die Masse hingegen groß, so ist die Regelabweichung und/oder die Regelreaktion stark. Im Rahmen der Erfindung wird dieser Zusammenhang vorteilhaft ausgenutzt, um eine Masseinformation betreffend die Masse des Läufers und/oder die Masse eines mit dem Läufer bewegten Gegenstandes zu ermitteln. Dabei ist es häufig noch nicht einmal nötig, einen bestimmten oder gar genauen Massewert zu ermitteln. Vielmehr besteht eine besonders einfache Implementierung darin, festzustellen, ob ein mit dem Läufer 14 zu bewegender Gegenstand am Läufer vorhanden ist oder nicht, gegebenenfalls in der richtigen Anzahl oder Menge.

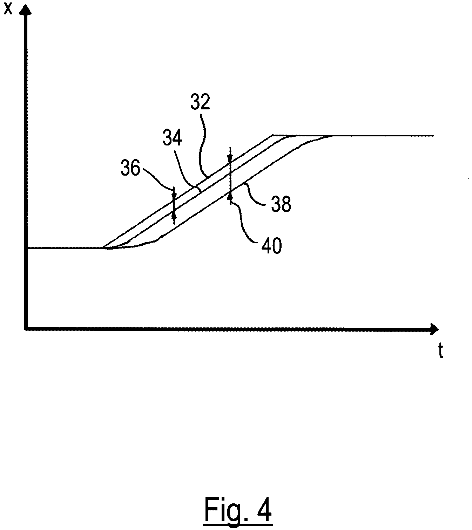

Fig. 4 zeigt eine Auftragung verschiedener Bewegungsverläufe eines Läufers, wobei die Abszisse die Zeit repräsentiert und mit t bezeichnet ist und wobei die Ordinate die Position des Läufers in Bezug auf die Führungsbahn repräsentiert und mit x bezeichnet ist. Die x-Richtung entspricht damit der in Fig. 3 gekennzeichneten Führungsachse 18.

Es ist ein Soll-Bewegungsverlauf 32 einer beispielhaften, geregelten Masseermittlungsbewegung dargestellt. Dabei wird der Läufer von einer ersten Position mit konstanter Geschwindigkeit zu einer zweiten Position bewegt, die von der ersten Position verschieden ist.

Außerdem ist ein tatsächlicher Bewegungsverlauf 34 eines Läufers dargestellt. Dieser weist eine Regelabweichung 36 vom Soll-Bewegungsverlauf 32 auf, die hier als Schleppfehler ausgebildet ist. Ein weiterer tatsächlicher Bewegungsverlauf 38 eines Läufers weist ebenfalls eine Regelabweichung 40 gegenüber dem Soll-Bewegungsverlauf 32 auf.

Anhand einer Regelabweichung 36 oder 40 lässt sich eine Masseinformation betreffend den bewegten Läufer ermitteln, da es sich bei der Regelabweichung um eine Trägheitsreaktion des Systems handelt. Je größer die Regelabweichung 36 bzw. 40 ist, desto größer ist die bewegte Masse des Läufers. Anhand des Unterschieds der Regelabweichungen 36 und 40 kann außerdem auf einen Unterschied der bewegten Massen der betreffenden Läufer geschlossen werden. Falls die dargestellten Bewegungsverläufe einen bestimmten Läufer betreffen, so kann beispielsweise anhand eines Unterschieds in den Regelabweichungen 36 und 40 ein unbeladener und ein beladener Zustand des Läufers differenziert werden. Dabei würden dem unbeladenen Zustand der Bewegungsverlauf 34 und dem beladenen Zustand der Bewegungsverlauf 38 entsprechen.

Der darstellte Soll-Bewegungsverlauf 32 kann beispielsweise eine ohnehin vorgesehene Bewegung des Läufers darstellen, während derer die Masseermittlung durchgeführt werden kann.

### Bezugszeichenliste

- 10: Transportsystem
- 12: Linearmotor
- 14: Läufer
- 16: Führungsbahn
- 18: Führungsachse
- 20: Elektromagneten
- 22: Antriebsmagnet
- 24: Führungsrollen
- 26: Führungsschiene
- 28: Positionserfassungseinrichtung
- 30: Positionsmagnet
- 32: Soll-Bewegungsverlauf
- 34: Bewegungsverlauf
- 36: Regelabweichung
- 38: Bewegungsverlauf
- 40: Regelabweichung

## Patentansprüche

1. Linearmotorsystem (10), insbesondere Transportsystem, z.B. Multicarrier, umfassend:
eine Führungsbahn (16) mit einer Mehrzahl von entlang der Führungsbahn verteilt angeordneten Elektromagneten (20);
wenigstens einen Läufer (14), der von der Führungsbahn (16) geführt und entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20),
**dadurch gekennzeichnet,**
**dass** die Steuerungseinrichtung dazu eingerichtet ist, während einer Bewegung des Läufers (14) eine Trägheitsreaktion der bewegten Masse des Läufers (14) zu erfassen und auf Basis der Trägheitsreaktion eine Masseinformation betreffend die Masse des Läufers (14) zu ermitteln.

2. Linearmotorsystem (10) nach Anspruch 1,
wobei das Linearmotorsystem (10) eine Informationsrückführungseinrichtung (28) zur Rückführung wenigstens einer Rückführungsinformation betreffend die Bewegung des Läufers und/oder die Aktivität der Elektromagneten (20) während einer Bewegung des Läufers (14) an die Steuerungseinrichtung umfasst.

3. Linearmotorsystem (10) nach Anspruch 1 oder 2,
wobei die Steuerungseinrichtung dazu eingerichtet ist, die Bewegung des Läufers (14), insbesondere auf Basis der Rückführungsinformation, zu regeln und auf Basis einer Regelabweichung (36, 40) und/oder einer Regelreaktion die Masseinformation zu ermitteln.

4. Linearmotorsystem (10) nach wenigstens einem der vorstehenden Ansprüche, wobei die Trägheitsreaktion auf Basis einer Position des Läufers (14) relativ zur Führungsbahn (16), insbesondere einer Position längs der Führungsbahn (16), erfasst wird.

5. Linearmotorsystem (10) nach wenigstens einem der vorstehenden Ansprüche, wobei die Trägheitsreaktion auf Basis eines Spulenstrom eines der Elektromagneten (20) erfasst wird.

6. Linearmotorsystem (10) nach wenigstens einem der vorstehenden Ansprüche, wobei die Steuerungseinrichtung dazu eingerichtet ist, auf Basis der Masseinformation eine Produktinformation betreffend ein vom Läufer (14) zu bewegendes Produkt zu ermitteln, insbesondere betreffend die Masse des Produkts und/oder eine Anzahl an Produkten oder Produktteilen.

7. Linearmotorsystem (10) nach wenigstens einem der vorstehenden Ansprüche, wobei die Steuerungseinrichtung dazu eingerichtet ist, den Läufer (14) zu einer Masseermittlungsbewegung anzusteuern, während der Masseermittlungsbewegung eine Trägheitsreaktion, insbesondere durch eine Rückführungsinformation, zu erfassen und auf deren Basis die Masseinformation zu ermitteln.

8. Linearmotorsystem (10) nach wenigstens einem der vorstehenden Ansprüche, wobei die Masseinformation in wenigstens einem Masseermittlungsabschnitt in Bezug auf die Führungsbahn ermittelbar ist und wobei der Masseermittlungsabschnitt auswählbar und insbesondere die Auswahl veränderbar ist.

9. Linearmotorsystem (10) nach wenigstens einem der vorstehenden Ansprüche, wobei das Linearmotorsystem (10) eine Schnittstelle zur Ausgabe der Masseinformation, insbesondere an ein Anwendergerät, und/oder zur Eingabe von Daten und/oder Befehlen durch einen Anwender und/oder ein Anwendergerät umfasst.

10. Verfahren zum Betreiben eines Linearmotorsystems (10),
insbesondere eines Transportsystems, z.B. eines Multicarrier-Systems, insbesondere eines Linearmotorsystems nach einem der vorstehenden Ansprüche,
wobei das Linearmotorsystem (10) umfasst:
eine Führungsbahn (16) mit einer Mehrzahl von entlang der Führungsbahn (16) verteilt angeordneten Elektromagneten (20);
wenigstens einen Läufer (14), der von der Führungsbahn (16) geführt und entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20);
wobei das Verfahren umfasst,
dass während einer Bewegung des Läufers (14) eine Trägheitsreaktion der bewegten Masse des Läufers (14) erfasst wird und auf Basis der Trägheitsreaktion eine Masseinformation betreffend die Masse des Läufers (14) ermittelt wird.

11. Verfahren nach Anspruch 10,
wobei während einer ersten Bewegung eine erste Masseinformation ermittelt wird, und wobei während einer zweiten Bewegung eine zweite Masseinformation ermittelt wird;
insbesondere wobei zwischen den Bewegungen dem Läufer (14) ein Produkt zugeführt oder vom Läufer (14) abgeführt wird.

12. Verfahren nach Anspruch 11,
wobei eine Differenz der Masseninformationen ermittelt wird.

13. Verfahren nach wenigstens einem der Ansprüche 10 bis 12,
wobei die Masseinformation und/oder eine Differenz zwischen zwei, insbesondere ermittelten, Masseinformationen mit einem Sollwert und/oder einem Sollbereich verglichen wird.

14. Verfahren nach Anspruch 13,
wobei anhand des Vergleichs eine Fehlerinformation ermittelt wird, insbesondere wobei die Fehlerinformation eine Information darüber umfasst, ob ein Produkt am Läufer (14) in vorgesehener Anzahl und/oder Masse vorhanden ist oder nicht.

15. Verfahren nach wenigstens einem der Ansprüche 10 bis 14,
wobei die Masseinformation in mehreren Abschnitten des Linearmotorsystems (10) bezogen auf die Führungsbahn (16) überwacht wird, insbesondere über den gesamten vorgesehenen Bewegungsweg des Läufers (14).
